# EUROPÄISCHE PATENTSCHRIFT

(11) **EP 0 743 267 B1**
(45) Veröffentlichungstag und Bekanntmachung des Hinweises auf die Patenterteilung: **03.02.1999**
(21) Anmeldenummer: 96104215.7
(22) Anmeldetag: 16.03.1996
(51) Int. Cl.: B65G 47/84, B67C 3/24

(54) **Transportstern für Gefässe**
Star coneyor for vessels
Roue convoyeuse à étoile pour récipients

(30) Priorität: 13.05.1995 DE 29507933 U; 15.11.1995 DE 19542518
(43) Veröffentlichungstag der Anmeldung: 20.11.1996
(73) Patentinhaber: Kronseder, Hermann, D-93086 Wörth (DE)
(72) Erfinder: Kronseder, Hermann, D-93086 Wörth (DE)

(56) Entgegenhaltungen:
- EP-A- 0 366 225
- DE-U-29 501 897
- NL-A- 6 513 849
- US-A- 3 155 228
- US-A- 4 651 879

## Beschreibung

Die Erfindung betrifft einen Transportstern für Gefäße gemaß dem Oberbegriff des Anspruchs 1.

Es ist bereits ein derartiger Transportstern bekannt, bei dem jeder Spreizkörper als achssymmetrischer Nocken ausgebildet und zwischen den zwei Gegenarmen der zugehörigen Greifzange drehbar im Grundkörper gelagert ist (DE-U-295 01 897). Nimmt der Nocken eine von zwei deckungsgleichen, um 180 Grad versetzten Schließpositionen ein, in denen seine parallelen Seitenflächen tangential zur Drehachse des Transportsterns ausgerichtet sind, so drückt er die Gegenarme entgegen der Kraft einer Feder auseinander und die Greifarme nehmen ihre einzige Schließposition mit einem definierten gegenseitigen Anstand ein. Diese definierte Schließposition der Greifzange ist nur für einen bestimmten Durchmesserbereich der Gefäße geeignet. Ein Umstellen auf einen anderen Durchmesserbereich ist nicht möglich. Soll eine andere Gefäßsorte mit einem anderen Durchmesser transportiert werden, so muß der Transportstern als ganzes ausgetauscht werden. Dies ist kostenintensiv und zeitraubend.

Weiter ist ein Transportstern bekannt, bei dem der Spreizkörper aus einem radial beweglichen Keil besteht, der durch eine in sich geschlossene stationäre Steuerkurve zwischen die Gegenarme der zugehörigen Greifzange hineingedrückt wird (DE-A-1 482 616). Bei diesem Transportstern läßt sich infolge der Übersetzung zwischen dem Spreizkörper und den Gegenarmen mit einer relativ geringen Steuerkraft eine relativ hohe Greifkraft erzielen, so daß die Gefäße von den Greifzangen zuverlässig erfaßt werden. Im Falle einer Umstellung auf andere Flaschendurchmesser muß die Steuerkurve, die den Spreizkörper im gesamten Greifbereich nach außen drängt, ausgetauscht oder verstellt werden. Der konstruktive Aufwand hierfür sowie der Zeitaufwand beim Umstellen ist entsprechend hoch.

Das Gleiche gilt für einen anderen bekannten Transportstern für Gefäße, bei dem die Greifzangen durch jeweils zwei einarmige Hebel gebildet werden, deren Lagerwellen mittels einer Verzahnung ineinandergreifen (EP-A-366 225). An einer der Steuerwellen ist ein Rollenhebel befestigt, der eine ortsfeste, in sich geschlossene Steuerkurve mit konischem Umfang abtastet. Die Steuerkurve ist in der Höhe verstellbar, wodurch der Schließwinkel und Öffnungswinkel der Greifzangen zur Anpassung an unterschiedliche Gefäßdurchmesser verstellt werden können. Zwar ist hier die Umstellung etwas schneller durchführbar, der bauliche Aufwand ist jedoch enorm.

Der Erfindung liegt die Aufgabe zugrunde, bei einem gattungsgemäßen Transportstern unter Beibehaltung der einfachen und betriebssicheren Bauweise ein rasches und müheloses Umstellen auf andere Gefäßdurchmesser zu ermöglichen.

Diese Aufgabe wird erfindungsgemäß durch die im Kennzeichen des Anspruchs 1 angegebenen Merkmale gelöst.

Bei einem erfindungsgemäßen Transportstern sind in die Greifzangen selbst mehrere vorgegebene Schließpositionen integriert, die aufgrund der Selbsthaltung der Spreizkörper ohne Unterstützung einer Steuerkurve eingehalten werden. Es genügt daher eine kurze Ansteuerung der gewünschten Schließposition beim Erfassen des Gefäßes und eine kurze Ansteuerung beim Freigeben des Gefäßes. Der konstruktive Aufwand hierfür ist äußerst gering.

Vorteilhafte Weiterbildungen der Erfindung, die alle zu einem einfachen Aufbau, einer sicheren Funktion und einer optimalen Anpassung an unterschiedliche Gefäßdurchmesser beitragen, sind in den Unteransprüchen enthalten.

Im Nachstehenden werden vier Ausführungsbeispiele der Erfindung anhand der Zeichnungen beschrieben. Es zeigen:
- Fig. 1: die teilweise Draufsicht auf die erste Ausführungsform eines Transportsterns,
- Fig. 2: den Schnitt A-B nach Fig. 1,
- Fig. 3: die vergrößerter Draufsicht auf zwei Greifzangen des Transportsterns nach Fig. 1 und 2,
- Fig. 4: die vergrößerte Draufsicht auf eine andere Ausführungsform einer Greifzange,
- Fig. 5: die teilweise Draufsicht auf die dritte Ausführungsform eines Transportsterns,
- Fig. 6: die teilweise Draufsicht auf die vierte Ausführungsform eines Transportsterns.

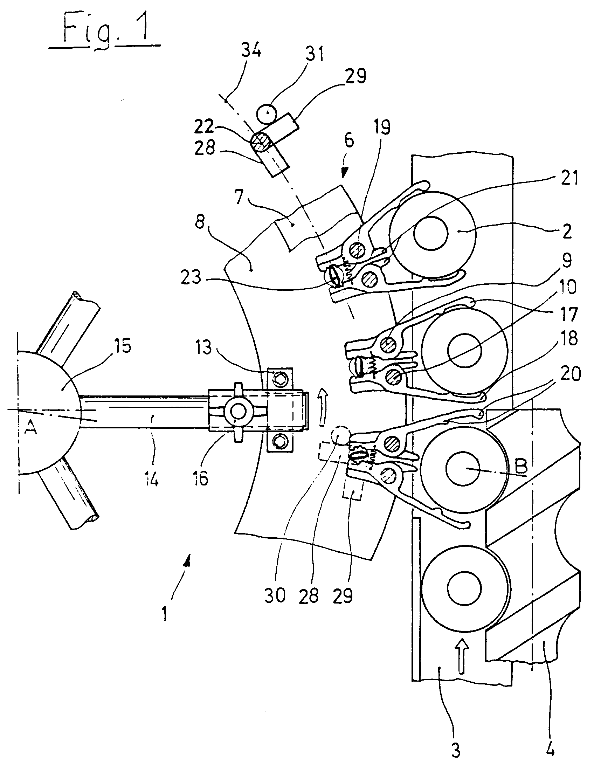

Der Transportstern 1 nach Fig. 1 bis 3 ist zum Transportieren von aufrechtstehenden Gefäßen in Form von Flaschen 2 eingerichtet. Er ist im Einlauf einer Flaschenbehandlungsmaschine, beispielsweise einer Inspektionsmaschine, integriert, von der nur der Zuförderer 3, die Einteilschnecke 4 und eine Antriebswelle 5 für den Transportstern 1 dargestellt sind.

Der Transportstern 1 weist einen Grundkörper 6 auf, der im wesentlichen aus zwei parallelen, kreisförmigen Ringen 7, 8 besteht. Die beiden Ringe 7, 8 haben den gleichen Außendurchmesser. Die Innendurchmesser sind unterschiedlich, wobei der Innendurchmesser des oberen Ringes 7 kleiner ist als der Innendurchmesser des unteren Ringes 8. Die beiden Ringe 7, 8 sind konzentrisch angeordnet und durch eine Anzahl von über ihren Umfang verteilten Paaren von Bolzen 9, 10 mit kreisförmigem Querschnitt starr miteinander verbunden. Dabei ist jeder Bolzen 9, 10 mittels zweier Schrauben 11 einzeln lösbar zwischen den beiden Ringen 7, 8 fixiert.

Der untere Ring 8 weist an seiner Innenseite gleichmäßig über den Umfang verteilt mehrere rechteckige Aussparungen 12 auf, die von brückenförmigen Halteklötzen 13 überdeckt werden. Die am Ring 8 befestigten Halteklötze 13 sitzen lose auf den Enden von radialen Armen 14 einer Nabe 15, die ihrerseits auf der Antriebswelle 5 befestigt ist. Mittels mehrerer auf die Halteklötze 13 einwirkender, manuell betätigbarer Klemmvorrichtungen 16 ist der Grundkörper 6 auf den Armen 14 lösbar festgeklemmt und mit seiner Mittelachse konzentrisch zur Antriebswelle 5 ausgerichtet.

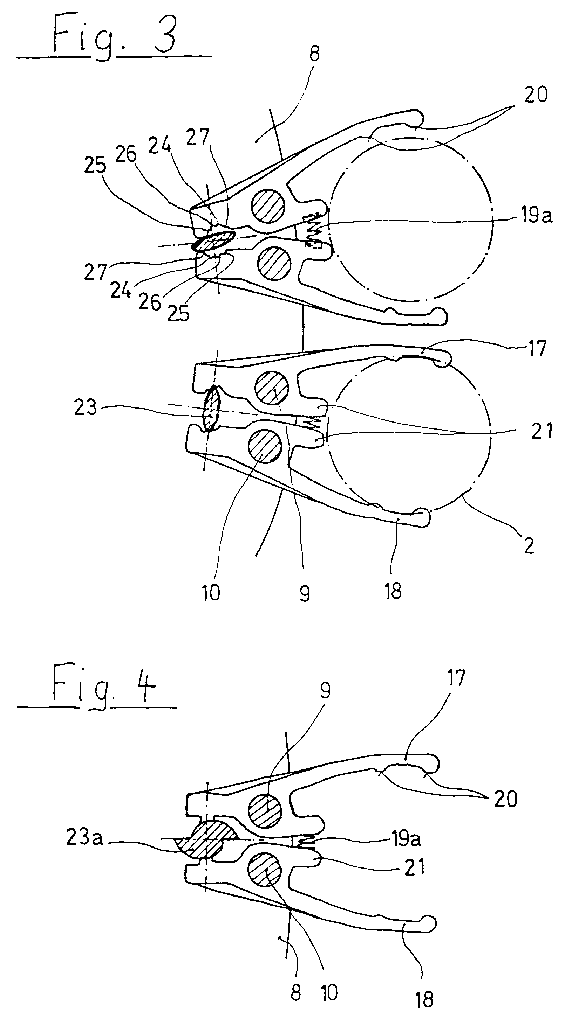

Auf jedem Bolzen 9, 10 ist eine einstückig aus zähelastischem Kunststoff geformte Klammer 17, 18 schwenkbar gelagert. Die beiden Klammern 17, 18 eines Paares von Bolzen 9, 10 sind spiegelbildlich nach Art von Doppelhebeln ausgebildet. Die radial nach außen weisenden Hebelarme dienen als Greifarme und bilden zusammen eine Greifzange, welche die zwischen ihnen sitzende Flasche 2 um mehr als 180 Grad umspannt. Die beiden radial nach innen weisenden Hebelarme bilden Gegenarme, an denen eine Zugfeder 19 befestigt ist. Diese zieht die Gegenarme zusammen und versucht so, die von zwei zusammengehörigen Klammern 17, 18 gebildete Greifzange zu öffnen. Die gleiche Wirkung kann durch eine zwischen die Greifarme eingesetzte Druckfeder 19a erzielt werden, wie in Fig. 3 gezeigt. Die Greifarme sind an ihren aufeinander zuweisenden Endbereichen mit zwei mit Abstand zueinander senkrecht verlaufenden Wülsten 20 versehen, welche die Flaschen 2 aller zu bearbeitenden Durchmesserbereiche auf dem gewünschten Teilkreis zentrieren. Außerdem sind die Klammern 17, 18 im Bereich ihrer Lagerstellen mit radial nach außen weisenden Nasen 21 versehen, welche beim Einlaufen der Flaschen 2 als Anschlag dienen.

Parallel zu jedem Paar von Bolzen 9, 10 und zwar mittig zwischen den Gegenarmen der zusammengehörigen Klammern 17, 18 ist in den Ringen 7, 8 jeweils eine Steuerwelle 22 drehbar gelagert. Diese weist auf Höhe der Gegenarme einen länglichen Nocken 23 mit ovalem Querschnitt auf, der teilweise durch zwei parallele Abflachungen der Steuerwelle 22 gebildet wird. Liegt der Nocken 23 mit seinen parallelen Seitenflächen mehr radial zur Mittelachse des Transportsterns 1, so definiert er die Öffnungsposition der zugehörigen Klammern 17, 18, da in diesem Falle die Gegenarme durch die Zugfeder 19 maximal angenähert und dadurch die Greifarme maximal voneinander entfernt sind. In der Öffnungsposition können Flaschen 2 aller zu bearbeitenden Durchmesserbereiche ungehindert in die von den Klammern 17, 18 gebildeten "Sterntaschen" einlaufen. Liegt der Nocken 23 mit seinen parallelen Seitenflächen mehr tangential zur Mittelachse des Transportsterns 1, so definiert er drei unterschiedliche Schließpositionen der zugehörigen Klammern 17, 18, da hier die beiden Gegenarme entgegen der Kraft der Zugfeder 19 weit auseinandergespreizt und die Greifarme entsprechend angenähert sind und zwar auf einen Abstand, der geringer ist als der Durchmesser der zu transportierenden Flaschen 2. Dies führt zu einer elastischen Durchbiegung der Klammern, falls eine Flasche 2 ergriffen wird. Durch die so erzeugte starke Greifkraft in Verbindung mit den Wülsten 20 werden die Flaschen 2 sicher zwischen den Klammern 17, 18 fixiert, so daß keine Führungsorgane wie z.B. Geländer oder Führungsbögen im Transportbereich erforderlich sind.

Wie die Fig. 3 zeigt, sind die zusammengehörigen Klammern 17, 18 einer Greifzange an den aufeinander zuweisenden Seiten der Gegenarme mit jeweils drei spiegelbildlich versetzten, unterschiedlich tiefen Kerben 24, 25, 26 versehen, deren Querschnitt an die Form des Nockens 23 angepaßt ist. Sitzt der Nocken 23 in den beiden tiefen Kerben 24, so definiert er eine erste Schließposition für einen "großen" Flaschendurchmesser. Sitzt der Nocken 23 in den beiden flachen Kerben 25, so definiert er eine zweite Schließposition für einen "kleinen" Flaschendurchmesser. Sitzt der Nocken 23, wie in Fig. 3 unten gezeigt ist, in den beiden mittleren Kerben 26, so definiert er eine dritte Schließposition für einen "mittleren" Flaschendurchmesser. In den Schließpositionen steht der Nocken 23 bezüglich der Drehachse des Transportsterns 1 mehr tangential als radial. Die Form der Kerben 24, 25, 26 ist dergestalt, daß der Nocken 23 in allen Schließstellungen selbsthemmend fixiert ist, wobei auf ihn die Kraft der Zugfeder 19 und, falls eine Flasche 2 eingespannt ist, die durch die elastische Verbiegung der Klammern 17, 18 erzeugte Spannkraft einwirkt. Andererseits sind die abgerundeten Kerben 24, 25, 26 derart ausgebildet, daß trotz dieser Kräfte unter elastischer Verbiegung der Klammern 17, 18 der Nocken 23 bei Einwirkung eines entsprechenden Drehmoments jederzeit in die Kerben 24, 25, 26 hineingeschnappt bzw. aus diesen herausgeschnappt werden kann. Dies wird durch leicht abgerundete Zwischenbereiche zwischen den benachbarten Kerben 24, 25, 26 begünstigt.

Wie die Fig. 3, oben, zeigt, liegt der Nocken 23 in der Öffnungsposition nicht exakt radial zur Drehachse des Transportsterns 1 sondern leicht schräg. Wie die Fig. 3, unten, zeigt, liegt der Nocken 23 in der dritten Schließposition für mittlere Flaschendurchmesser exakt tangential zur Drohachse des Transportsterns 1. Wird der Nocken 23 aus der Öffnungsposition in die dritte Schließposition entgegen dem Uhrzeigersinn verdreht, so durchläuft er einen Winkel von weniger als 90 Grad. Wird der Nocken 23 in die zweite Schließposition bzw. in die Kerben 25 bewegt, so durchläuft er einen Schwenkwinkel von exakt 90 Grad. Der Schwenkwinkel für die erste Schließposition bzw. die Kerben 24 ist noch etwas kleiner als für die dritte Schließposition bzw. die Kerben 26. Die Öffnungsposition und die drei Schließpositionen liegen somit innerhalb eines Schwenkbereichs von 90 Grad.

Bewegt sich der Nocken 23 aus der Öffnungsposition entgegen dem Uhrzeigersinn in Richtung Schließposition, so durchläuft er zunächst abgerundete Übergangsbereiche 27, wobei die Gegenarme zunehmend auseinandergedrängt werden und schnappt dann in die tiefen Kerben 24 ein. Bei Weiterführung der Drehbewegung schnappt der Nocken 23 als nächstes in die mittleren Kerben 26 und schließlich, nach einer Schwenkung von 90 Grad, in die flachen Kerben 25 ein. Dabei werden die Gegenarme der Klammern 17, 18 zunehmend weiter aufgespreizt und die Greifarme aufeinander zubewegt. Bei einer Rückdrehung in die Öffnungsposition verläuft die Bewegung entsprechend umgekehrt im Uhrzeigersinn.

Das untere Ende jeder Steuerwelle 22 ragt etwas aus dem unteren Ring 8 heraus. Auf diesen vorstehenden Enden sind jeweils zwei Steuerhebel 28, 29 in rechtwinkeliger Formation befestigt. Diese wirken mit zwei stationär an der Unterseite des Transportsterns 1 angeordneten, bolzenartigen Anschlägen 30, 31 zusammen und bilden mit diesen eine Steuereinrichtung 32 für die Klammern 17, 18.

Der erste Anschlag 30 ist innerhalb der kreisförmigen Umlaufbahn 34 der Steuerwellen 22 angeordnet und wirkt mit den oberen Steuerhebeln 28 zusammen. Bei einer Rotation des Transportsterns 1 in Pfeilrichtung schwenkt er alle vorbeilaufenden Steuerwellen 22 aus der Öffnungsposition in eine ausgewählte Schließposition und zwar im Übergangsbereich zwischen Einteilschnecke 4 und Transportstern 1. An dieser Stelle sitzen die Flaschen 2 einerseits noch in einer durch den Gewindegang gebildeten Tasche der Einteilschnecke 4 und sind andererseits voll in eine durch die geöffneten Klammern 17, 18 gebildete Tasche des Transportsterns 1 eingedrungen. Durch das nunmehr erfolgende Schließen der Klammern 17, 18 werden die Flaschen 2 im Transportstern 1 festgeklemmt und zentriert und laufen mit diesem weiter auf einer bogenförmigen Bahn weg vom Zuförderer 3 hin zu einem nicht gezeigten Drehtisch oder dgl..

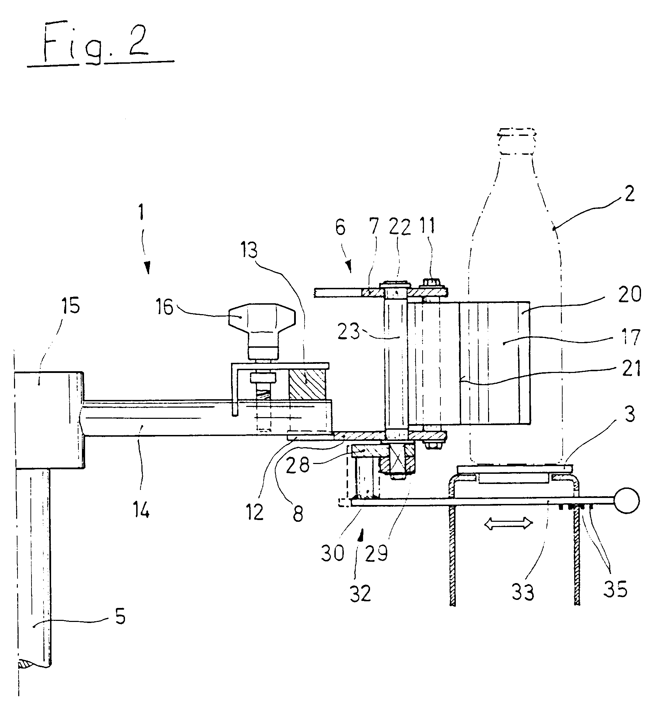

Wie die Fig. 2 zeigt, ist der erste Anschlag 30 an der Oberseite eines horizontalen Schiebers 33 in Form eines Flacheisens befestigt, der unter dem Ende der Einteilschnecke 4 längsverschieblich im Rahmen des Zuförderers 3 gelagert ist und zwar in etwa radial zur Drehachse des Transportsterns 1. Durch Rasten 35 an der Unterseite des Schiebers 33 ist dieser in drei definierten Positionen fixierbar.

In der gezeigten Mittelstellung erteilt der Anschlag 30 allen vorbeilaufenden Steuerwellen 22 eine Schwenkung von ca. 75 Grad entgegen dem Uhrzeigersinn. Dadurch werden die Nocken 23 aus der Öffnungsposition in die dritte Schließposition verschwenkt und in die mittleren Kerben 26 eingeschnappt. In der strichliert angedeuteten inneren Endposition erteilt der Anschlag 30 allen vorbeilaufenden Steuerwellen 22 eine Schwenkung von ca. 60 Grad entgegen dem Uhrzeigersinn. Dadurch werden die Nocken 23 aus der Öffnungsposition in die erste Schließposition verschwenkt und in die tiefen Kerben 24 eingeschnappt. In der strichpunktiert angedeuteten äußeren Endposition erteilt der Anschlag 30 allen vorbeilaufenden Steuerwellen 22 eine Schwenkung von ca. 90 Grad entgegen dem Uhrzeigersinn. Dadurch werden die Nocken 23 aus der Öffnungsposition in die zweite Schließposition verschwenkt und in die flachen Kerben 25 eingeschnappt. Durch manuelles Verstellen des Schiebers 33 mit dem ersten Anschlag 30 ist somit der Transportstern 1 in kürzester Zeit und mühelos auf drei unterschiedliche Flaschendurchmesserbereiche einstellbar.

Der zweite Anschlag 31 ist außerhalb der Umlaufbahn 34 der Steuerwellen 22 angeordnet und schwenkt alle vorbeilaufenden Steuerwellen 22 aus jeder beliebigen Schließposition zurück in die Öffnungsposition, maximal um 90 Grad im Uhrzeigersinn. Er ist im Übergangsbereich vom Transportstern 1 zu einem nicht gezeigten Drehtisch angeordnet, wo die Flaschen 2 aus dem Transportstern 1 auslaufen. Im Umlaufbereich zwischen den Anschlägen 30 und 31 werden die Flaschen 2 allein aufgrund der Selbsthemmung der Nocken 23 sicher fixiert.

Im vorbeschriebenen Ausführungsbeispiel dient der Transportstern 1 als reiner Einlaufstern ohne jegliche Sortierfunktion. Durch eine höhengesteuerte Anordnung der Anschläge 30 und/oder 31, z.B. mittels eines Druckluftzylinders, ist es jedoch auch möglich, nur bestimmte Klammern 17, 18 zu schließen bzw. zu öffnen, ohne die Umstellbarkeit des Transportsterns 1 auf unterschiedliche Flaschendurchmesser zu beeinträchtigen. Auch können mehrere Anschläge zum Schließen und/oder zum Öffnen der Klammern 17, 18 an verschiedenen Bereichen der Umlaufbahn angeordnet werden, beispielsweise um die Flaschen 2 auf mehrere Förderer zu verteilen.

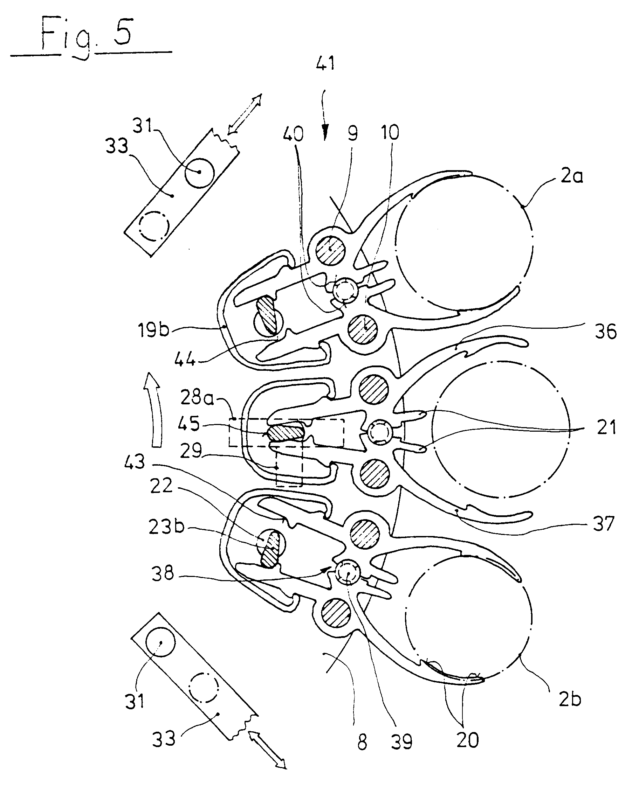

Beim Ausführungsbeispiel nach Fig. 4 hat der Nocken 23a die Form zweier um 180 Grad versetzter Spiralsegmente. Die Gegenarme der Klammern 17, 18 sind mit entsprechend gerundeten Gegenflächen versehen. Hier erfolgt die Selbsthemmung der Nocken 23a nicht formschlüssig, sondern reibschlüssig. Über einen bestimmten Bereich ist eine stufenlose Einstellung auf verschiedene Flaschendurchmesser möglich. Dementsprechend ist es zweckmäßig, den Anschlag 30 stufenlos, beispielsweise mittels einer Schraubspindel, verstellbar am Zuförderer 3 anzuordnen. Die starre Anordnung des Anschlags 31 bleibt unverändert.

In Fig. 4 ist die Schließstellung für einen großen Flaschendurchmesser gezeigt. Wird der Nocken 23a weiter entgegen dem Uhrzeigersinn verschwenkt, werden die Klammern 17, 18 weiter geschlossen. Bei einer Schwenkung im Uhrzeigersinn werden die Klammern 17, 18 geöffnet.

Der Transportstern 41 nach Fig. 5 stimmt teilweise mit dem Transportstern 1 nach Fig. 1 und 2 überein; im Nachstehenden werden daher nur die Abweichungen beschrieben. Die beiden zusammengehörigen, eine Greifzange bildenden Klammern 36, 37 aus elastischem Kunststoff, drehbar gelagert auf den Bolzen 9, 10, sind hier durch ein Getriebe 38 in Form einer Verzahnung miteinander gekoppelt. Das Getriebe 38 weist einen senkrechten Stift 39 auf, der in halbkreisförmige Nuten 40 in den Klammern 36, 37 spielfrei eingreift. Der Stift 39 ist im mittleren Bereich mit einer umlaufenden Ringnut versehen, in welche entsprechende Vorsprünge in den Nuten 40 eingreifen. Hierdurch wird der Stift 39 höhenmäßig fixiert. Der Stift 39 liegt in etwa mittig zwischen den Bolzen 9, 10 und erstreckt sich über die gesamte Höhe der Klammern 36, 37. Er stellt eine Drehverbindung mit entgegengesetztem Drehsinn zwischen den beiden Klammern 36, 37 her, so daß nur eine der beiden Klammern 36, 37 direkt angesteuert werden muß.

Diese einseitige Ansteuerung jeder Greifzange erfolgt durch jeweils einen drehbaren Nocken 23b, der nur eine exzentrisch zu seiner Drehachse liegende, abgerundete Druckzone 45 aufweist. Die Gegenarme der beiden Klammern 36, 37 sind mit jeweils einer Rast 43, 44 versehen. Die Rasten 43, 44 sind unterschiedlich "tief" und wirken wahlweise mit dem Nocken 23b zusammen. An der Außenseite der Gegenarme sind vorspringende Nasen angeformt. Diese dienen als Halterung für ein Federelement 19b in Form eines Profilstücks aus Kunststoff mit im wesentlichen U-förmigem Querschnitt. Dieses ist mit Vorspannung auf die zusammengehörigen Gegenarme aufgesetzt und drückt diese im Öffnungssinne zusammen.

An der Unterseite jeder Steuerwelle 22 sind wiederum zwei Steuerhebel befestigt. Der eine Steuerhebel 28a verläuft im wesentlichen parallel zur Querschnittslängsachse des Nockens 23b und ist nach der anderen Seite hin verlängert, so daß er mit dem rechtwinklig zu ihm angeordneten zweiten Steuerhebel 29 eine Art T-Stück bildet. Mit den Steuerhebeln 28a, 29 wirken zwei stationäre Anschläge 30, 31 zusammen, die beide mittels Schiebern 33 radial zur Drehachse des Transportsterns 41 verstellbar sind. Die Anschläge 30, 31 setzen entweder links oder rechts von der Umlaufbahn der Steuerwellen 22, wobei ihre Positionen durch Rasten 35 definiert sind.

Befinden sich die beiden Anschläge 30, 31 in der in Fig. 5 in vollen Linien dargestellten Position, so wirken sie ähnlich wie die Anschläge 30, 31 nach Fig. 1. Das heißt, daß durch den ersten Anschlag 30 die Steuerwellen 22 der in Pfeilrichtung vorbeilaufenden Nocken 23b um ca. 90 Grad aus ihrer Öffnungsposition (mittlere Greifzange in Fig. 5) entgegen dem Uhrzeigersinn in ihre erste Schließposition (untere Greifzange in Fig. 5) verschwenkt werden. Dabei wird der Gegenarm der Klammer 37 mit der Rast 44 durch die Druckzone 45 des zugehörigen Nockens 23b in die Greif- oder Schließposition gedrängt. Durch das Getriebe 38 wird diese Schwenkbewegung im entgegengesetzten Drehsinn auf die andere Klammer 36 übertragen. Dabei wird eine Flasche 2b mit kleinem Durchmesser erfaßt und, bei leichtem Aufbiegen der Klammern 36, 37, elastisch eingeklemmt. Die Rast 44 ist gegenüber dem Totpunkt etwas entgegen dem Uhrzeigersinn versetzt, so daß der Nocken 23b durch die Kraft des Federelements 19b in Verbindung mit der elastischen Aufbiegung der Zangen 36, 37 selbsthemmend stabilisiert wird. Bete Passieren des zweiten Anschlags 31 werden die Steuerwellen 22 um ca. 90 Grad im Uhrzeigersinn gedreht, wobei die Nocken 23b in ihre Öffnungsposition verschwenkt und die Klammern 36, 37 durch das Federelement 19b geöffnet werden.

Befinden sich die Anschläge 30, 31 in der strichpunktiert dargestellten Position, so verlaufen die Schwenkbewegungen der passierenden Steuerwellen 22 genau entgegengesetzt. Das heißt, daß die Nocken 23b aus ihrer Öffnungsposition im Uhrzeigersinn in ihre zweite Schließposition (obere Greifzange in Fig. 5) verschwenkt werden. Hierbei wird der Gegenarm der Klammer 36 mit der Rast 43 durch die Druckzone 45 in die Schließposition gedrängt, wobei eine Flasche 2a mit großem Durchmesser erfaßt und eingeklemmt wird. Auch die Rast 43 liegt zwecks Selbsthemmung des Nockens 23b in der zweiten Schließposition etwas jenseits des Totpunkts.

Die Umstellung des Transportsterns 41 zwischen den beiden Flaschensorten ist ähnlich einfach wie die des Transportsterns 1 nach Fig. 1 und 2, es müssen lediglich die beiden Schieber 33 entsprechend gegensinnig verstellt werden. Die Verstellung kann auch automatisch mittels Druckluftzylindern oder dgl. erfolgen. Da die Rasten 43, 44 für die unterschiedlichen Flaschensorten an verschiedenen Klammern 36, 37 angeordnet sind, ist eine sichere Ansteuerung möglich und der Verschleiß an den Rasten 43, 44 ist gering.

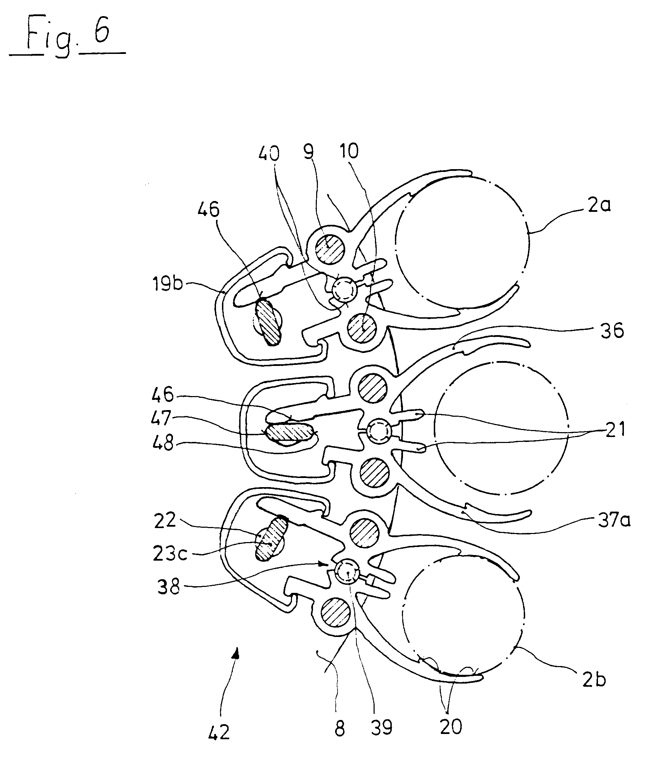

Der Transportstern 42 nach Fig. 6 stimmt teilweise mit dem Transportstern 41 nach Fig. 5 überein; im Nachstehenden werden nur die Abweichungen beschrieben. Hier ist nur der Gegenarm der Klammer 36 mit einer einzigen Rast 46 versehen, während der Gegenarm der anderen Klammer 37a im Bereich des Nockens 23c nicht vorhanden bzw. so weit verkürzt ist, daß er nur noch als Widerlager für das Federelement 19b dient. Die einseitige Ansteuerung der Greifzangen erfolgt somit ausschließlich über den Gegenarm der Klammer 36. Hierzu ist der Nocken 23c mit zwei um 180 Grad gegeneinander versetzten, abgerundeten Druckzonen 47, 48 versehen, die unterschiedlich weit von der Drehachse der Steuerwelle 22 entfernt sind. Die Schwenkung der Nocken 23c erfolgt in gleicher Weise wie die der Nocken 23b des Transportsterns 41 nach Fig. 5 durch nicht gezeigte verstellbare stationäre Anschläge 30, 31 und an den Steuerwellen 22 befestigte Steuerhebel 28a, 29.

Wird der Nocken 23c aus seiner Öffnungsposition (mittlere Greifzange in Fig. 6) um ca. 90 Grad im Uhrzeigersinn in seine erste Schließposition verschwenkt, so kommt die "kurze" Druckzone 47 mit der Klammer 36 in Kontakt und drückt deren Gegenarm in die Schließposition für eine Flasche 2a mit großem Durchmesser (obere Greifzange in Fig. 6). Wird der Nocken 23c aus seiner Öffnungsposition um ca. 90 Grad entgegen dem Uhrzeigersinn in seine zweite Schließposition verschwenkt, so drückt die "lange" Druckzone 48 den Gegenarm der Klammer 36 in seine Schließposition für eine Flasche 2b mit kleinem Durchmesser (untere Greifzange in Fig. 6). Die Stabilisierung des Nockens 23c in beiden Schließpositionen erfolgt mit Hilfe der Rast 46.

Bei den vorbeschriebenen Transportsternen besteht jede Greifzange aus zwei flexiblen Klammern, die gemeinsam durch einen Spreizkörper gesteuert werden. Statt dessen ist es auch möglich, jeder Klammer einen eigenen Spreizkörper zuzuordnen, um eine separate Steuerung der Klammern zu ermöglichen. Auch ist es denkbar, nur eine Klammer zu steuern und die andere Klammer ungesteuert bzw. starr auszubilden. Ferner ist es möglich, die Greifzangen und die Steuerwellen nicht direkt im Grundkörper zu lagern, sondern in jeweils einem eigenen Hilfsträger, der seinerseits gesteuert schwenkbar am Grundkörper gelagert ist. Hierdurch kann der Abstand und die Transportgeschwindigkeit der Gefäße in gewissen Grenzen variiert werden. Auch können die Spreizkörper mit mehr als zwei Druckzonen für mehr als zwei Schließpositionen ausgestattet werden. Durch all diese Maßnahmen wird der Rahmen der Erfindung nicht verlassen, genausowenig wie durch das Anbringen von drehbaren Rollen an den Spreizkörpern und oder an den Klammern zur Verringerung der Reibung beim Öffnen und Schließen der Greifzangen.

## Patentansprüche

1. Transportstern für Gefäße mit einem drehbaren Grundkörper (6) und mehreren an dessen Umfang angeordneten Greifzangen mit schwenkbaren Klammern (17, 18, 36, 37), die als Doppelhebel mit radial nach außen weisenden Greifarmen und radial nach innen weisenden Gegenarmen ausgebildet sind, an denen eine Steuereinrichtung (32) mit beweglich am Grundkörper (6) gelagerten, die Gegenarme in die Schließposition drängenden Spreizkörpern (23, 23a, 23b, 23c) angreift, dadurch gekennzeichnet, daß jeder Spreizkörper (23, 23a, 23b, 23c) mehrere selbsthemmende Schließpositionen mit unterschiedlichen Abständen der Greifarme aufweist.

2. Transportstern nach Anspruch 1, dadurch gekennzeichnet, daß die unterschiedlichen Schließpositionen jedes Spreizkörpers (23, 23b, 23c) abgestuft durch Rasten (24, 25, 26, 43, 44, 46) am Spreizkörper und/oder an den Gegenarmen definiert sind.

3. Transportstern nach Anspruch 1, dadurch gekennzeichnet, daß die unterschiedlichen Schließpositionen jedes Spreizkörpers (23a) stufenlos durch selbsthemmende Kurvenflächen am Spreizkörper und/oder an den Gegenarmen definiert sind.

4. Transportstern nach einem der Ansprüche 1 bis 3, dadurch gekennzeichnet, daß die Klammern (17, 18, 36, 37) aus elastischem Material bestehen und die beim Erfassen eines Gefäßes auftretende elastische Verformung die Selbsthemmung des Spreizkörpers (23, 23a, 23b, 23c) bewirkt oder zumindest unterstützt.

5. Transportstern nach einem der Ansprüche 1 bis 4, dadurch gekennzeichnet, daß zwischen zusammengehörigen Klammern (17, 18, 36, 37) ein die Gegenarme zusammendrängendes Federelement (19, 19a, 19b) eingesetzt ist.

6. Transportstern nach einem der Ansprüche 1 bis 5, dadurch gekennzeichnet, daß die Steuereinrichtung (32) im Einlaufbereich des Transportsterns (1, 41, 42) einen vorzugsweise verstellbaren stationären Anschlag (30) aufweist, der vorbeilaufende Spreizkörper (23, 23a, 23b, 23c) aus der Öffnungsposition in eine ausgewählte Schließposition überführt.

7. Transportstern nach einem der Ansprüche 1 bis 6, dadurch gekennzeichnet, daß die Steuereinrichtung (32) im Auslaufbereich des Transportsterns (1, 41, 42) einen ggf. verstellbaren stationären Anschlag (31) aufweist, der vorbeilaufende Spreizkörper (23, 23a, 23b, 23c) aus einer Schließposition in die Öffnungsposition überführt.

8. Transportstern nach einem der Ansprüche 1 bis 7, dadurch gekennzeichnet, daß die Spreizkörper durch drehbar im Grundkörper (6) gelagerte Nocken (23, 23a, 23b, 23c) gebildet werden, die an den Gegenarmen von Klammern (17, 18, 36, 37) sitzen und in mehreren unterschiedlichen Winkelpositionen (Schließpositionen) die Gegenarme unterschiedlich weit verdrängen und in einer anderen Winkelposition (Öffnungsposition) die Gegenarme freigeben.

9. Transportstern nach Anspruch 8, dadurch gekennzeichnet, daß die Nocken (23, 23b) eine ovale Grundform aufweisen und die Gegenarme der Klammern (17, 18, 36, 37) mit mehreren unterschiedlich tiefen Kerben (24, 25, 26, 43, 44) zur Aufnahme der Nocken (23, 23b) ausgestattet sind.

10. Transportstern nach Anspruch 9, dadurch gekennzeichnet, daß die Kerben (24, 25, 26) dicht nebeneinander liegen und abgerundete Zwischenbereiche aufweisen.

11. Transportstern nach Anspruch 8, dadurch gekennzeichnet, daß jeder Nocken (23a) zwei um 180 Grad versetzte, gleichartige Spiralbereiche aufweist.

12. Transportstern nach einem der Ansprüche 8 bis 11, dadurch gekennzeichnet, daß jeder Nocken (23, 23a, 23b, 23c) drehfest mit mindestens einem Steuerhebel (28, 28a, 29) verbunden ist, der mit stationären Anschlägen (30, 31) zusammenwirkt.

13. Transportstern nach Anspruch 12, dadurch gekennzeichnet, daß ein verstellbarer Anschlag (30) in mehreren unterschiedlichen Abständen zur Drehachse des Transportsterns (1) fixierbar ist, derart, daß die Nocken (23, 23a, 23b, 23c) beim Passieren des Anschlags (30) um unterschiedliche Schwenkwinkel und/oder mit unterschiedlichem Drehsinn verdreht werden können, wobei jedem Schwenkwinkel bzw. jede Drehrichtung eine bestimmte Schließposition zugeordnet ist.

14. Transportstern nach einem der Ansprüche 8 bis 13, dadurch gekennzeichnet, daß die unterschiedlichen Schließpositionen und die Öffnungsposition eines Nockens (23, 23a) innerhalb eines Schwenkwinkels von 90 Grad liegen.

15. Transportstern nach einem der Ansprüche 1 bis 14, dadurch gekennzeichnet, daß zwei eine Greifzange bildende Klammern (36, 37) durch ein Getriebe (38) drehfest miteinander gekoppelt sind und zwar mit unterschiedlichem Drehsinn.

16. Transportstern nach Anspruch 15, dadurch gekennzeichnet, daß das Getriebe (38) durch eine Verzahnung gebildet wird.

17. Transportstern nach Anspruch 15, dadurch gekennzeichnet, daß das Getriebe (38) einen Bolzen (39) aufweist, der lose in an beiden Klammern (36, 37) ausgebildete Nuten (40) eingreift.

18. Transportstern nach einem der Ansprüche 15 bis 17, dadurch gekennzeichnet, daß der Spreizkörper (23b, c) in den Schließpositionen jeweils nur an einer der beiden eine Greifzange bildenden Klammern (36, 37) angreift.

19. Transportstern nach einem der Ansprüche 15 bis 18, dadurch gekennzeichnet, daß der Nocken (23b) nur eine exzentrisch zu seiner Drehachse angeordnete Druckzone (45) aufweist, daß die Gegenarme der beiden zugehörigen Klammern (36, 37) mit unterschiedlich geformten Rasten (43, 44) versehen sind, und daß der Nocken (23b) zwischen beiden Klammern (36, 37) umschaltbar ist.

20. Transportstern nach einem der Ansprüche 15 bis 18, dadurch gekennzeichnet, daß der Nocken (23c) mehrere exzentrische, mit unterschiedlichem Abstand zu seiner Drehachse angeordnete Druckzonen (47, 48) aufweist, die wahlweise am Gegenarm der gleichen Klammer (36) angreifen.

21. Transportstern nach einem der Ansprüche 1 bis 20, dadurch gekennzeichnet, daß die unterschiedlichen Schließpositionen der Spreizkörper (23, 23a, 23b, 23c) durch die Steuereinrichtung (32) wahlweise anfahrbar sind.

## Claims

1. Star transporter for containers, having a rotary base structure (6) and a plurality of gripper tongs which are arranged at its periphery and have swivellable clamp elements (17, 18, 36, 37) constructed as double levers with radially outwardly directed gripper arms and radially inwardly directed counter arms and which are engaged by a control device (32) with spreader members (23, 23a, 23b, 23c) that are movably mounted on the base structure (6) and urge the counter arms into the closing position, characterised in that each of the spreader members (23, 23a, 23b, 23c) has a plurality of self locking closing positions with different spacing of the gripper arms.

2. Star transporter according to claim 1, characterised in that the different closing positions of each spreader member (23, 23b, 23c) are defined in steps by catches (24, 25, 26, 43, 44, 46) on the spreader member and/or on the counter arms.

3. Star transporter according to claim 1, characterised in that the different closing positions of each spreader member (23a) are defined steplessly by self locking curved surfaces on the spreader member and/or on the counter arms.

4. Star transporter according to one of claims 1 to 3, characterised in that the clamp elements (17, 18, 36, 37) consist of resilient material and the resilient deformation that occurs when a container is taken up causes or at least assists the self locking of the spreader member (23, 23a, 23b, 23c).

5. Star transporter according to one of claims 1 to 4, characterised in that a spring element (19, 19a, 19b) is disposed between clamp elements (17, 18, 36, 37) that belong together, to urge the counter arms towards each other.

6. Star transporter according to one of claims 1 to 5, characterised in that the control device (32) in the entry region of the star transporter (1, 41, 42) has a preferably adjustable stationary stop (30) which shifts passing spreader members (23, 23a, 23b, 23c) from the opening position to a selected closing position.

7. Star transporter according to one of claims 1 to 6, characterised in that the control device (32) in the exit region of the star transporter (1, 41, 42) has a possibly adjustable stationary stop (31) which shifts passing spreader members (23, 23a, 23b, 23c) from a closing position to the opening position.

8. Star transporter according to one of claims 1 to 7, characterised in that the spreader members are formed by cams (23, 23a, 23b, 23c) rotatably mounted in the base structure (6) which sit against the counter arms of clamp elements (17, 18, 36, 37) and which in a plurality of different angular positions (closing positions) urge the counter arms by different distances, and in another angular position (opening position) release the counter arms.

9. Star transporter according to claim 8, characterised in that the cams (23, 23b) have an oval basic shape and the counter arms of the clamp elements (17, 18, 36, 37) are provided with a plurality of indentations (24, 25, 26, 43, 44) of different depth to receive the cams (23, 23b).

10. Star transporter according to claim 9, characterised in that the indentations (24, 25, 26) are disposed closely next to each other and have rounded intervening regions.

11. Star transporter according to claim 8, characterised in that each cam (23a) has two equal spiral regions offset by 180 degrees.

12. Star transporter according to one of claims 8 to 11, characterised in that each cam (23, 23a, 23b, 23c) is connected rotationally fast with at least one control lever (28, 28a, 29) which co-operates with stationary stops (30, 31).

13. Star transporter according to claim 12, characterised in that an adjustable stop (30) can be fixed at a plurality of different spacings from the rotation axis of the star transporter (1), such that the cams (23, 23a, 23b, 23c) upon passing the stop (30) can be rotated by different swivel angles and/or in a different direction of rotation, each swivel angle and each direction of rotation being associated with a defined closing position.

14. Star transporter according to one of claims 8 to 13, characterised in that the different closing positions and the opening position of a cam (23, 23a) are disposed within a swivel angle of 90 degrees.

15. Star transporter according to one of claims 1 to 14, characterised in that two clamp elements (36, 37) which form a gripper tongs are coupled by a drive (38) to rotate fast with each other but in different directions of rotation.

16. Star transporter according to claim 15, characterised in that the drive (38) is formed by gear teeth.

17. Star transporter according to claim 15, characterised in that the drive (38) has a stud (39) which engages loosely in grooves (40) formed in both clamp elements (36, 37).

18. Star transporter according to one of claims 15 to 17, characterised in that in each case the spreader member (23b, c) in the closing positions engages only one of the two clamp elements (36, 37) that form a gripper tongs.

19. Star transporter according to one of claims 15 to 18, characterised in that the cam (23b) has only one pressure zone (45) arranged eccentrically with respect to its rotation axis, that the counter arms of the two associated clamp elements (36, 37) are provided with differently formed catches (43, 44), and that the cam (23b) can be switched as between the two clamp elements (36, 37).

20. Star transporter according to one of claims 15 to 18, characterised in that the cam (23c) has a plurality of eccentric pressure zones (47, 48) arranged at different spacings with respect to its rotation axis which selectively engage the counter arm of the same clamp element (36).

21. Star transporter according to one of claims 1 to 20, characterised in that the different closing positions of the spreader members (23, 23a, 23b, 23c) can be sought out selectively by the control device (32).

## Revendications

1. Roue convoyeuse en étoile pour des récipients avec un corps de base (6) qui peut tourner et avec plusieurs pinces de préhension disposées sur son pourtour avec des crampons pouvant pivoter (17, 18, 36, 37) constitués sous forme de doubles leviers avec des bras de préhension dirigés radialement vers l'extérieur et avec des bras antagonistes orientés radialement vers l'intérieur, sur lesquels vient en prise un système de commande (32) avec des corps extensibles (23, 23a, 23b, 23c) montés de façon mobile sur le corps de base (6) qui pressent les bras antagonistes dans leur position de fermeture,
caractérisé en ce que
chaque corps extensible (23, 23a, 23b, 23c) présente plusieurs positions de fermeture à blocage automatique avec des écartements différents des bras antagonistes.

2. Roue convoyeuse en étoile selon la revendication 1,
caractérisée en ce que
les différentes positions de fermeture de chaque corps extensible (23, 23a, 23b, 23c) sont définies de façon échelonnée par des encoches (24, 25, 26, 43, 44, 46) sur le corps extensible et/ou sur les bras antagonistes.

3. Roue convoyeuse en étoile selon la revendication 1,
caractérisée en ce que
les différentes positions de fermeture de chaque corps extensible (23a) sont définies sans gradin par des surfaces courbes à blocage automatique sur le corps extensible et/ou sur les bras antagonistes.

4. Roue convoyeuse en étoile selon la revendication 1 à 3,
caractérisée en ce que
les crampons (17, 18, 36, 37) sont réalisés en une matière élastique et la déformation élastique qui se produit lors de la préhension d'un récipient provoque le blocage automatique du corps extensible (23, 23a, 23b, 23c) ou du moins le soutient.

5. Roue convoyeuse en étoile selon la revendication 1 à 4,
caractérisée en ce que
l'on insère entre les crampons (17, 18, 36, 37) qui vont ensemble un élément à ressort (19, 19a, 19b) qui presse ensemble les bras antagonistes.

6. Roue convoyeuse en étoile selon la revendication 1 à 5,
caractérisée en ce que
le système de commande (32) présente dans la zone d'entrée de la roue convoyeuse en étoile (1, 41, 42) une butée fixe (30) de préférence réglable qui fait passer les corps extensibles (23, 23a, 23b, 23c) qui défilent de la position ouverte à une position de fermeture sélectionnée.

7. Roue convoyeuse en étoile selon la revendication 1 à 6,
caractérisée en ce que
le système de commande (32) présente dans la zone de sortie de la roue convoyeuse en étoile (1, 41, 42) une butée fixe (31), le cas échéant réglable qui fait passer les corps extensibles (23, 23a, 23b, 23c) qui défilent d'une position fermée à la position d'ouverture.

8. Roue convoyeuse en étoile selon la revendication 1 à 7,
caractérisée en ce que
les corps extensibles sont constitués par des cames (23, 23a, 23b, 23c), montées de façon à pouvoir tourner dans le corps de base (6), cames qui reposent sur les bras antagonistes des crampons (17, 18, 36, 37), et pressent à des largeurs différentes les bras antagonistes dans plusieurs positions angulaires différentes et libèrent les bras antagonistes dans une autre position angulaire (position d'ouverture).

9. Roue convoyeuse en étoile selon la revendication 8,
caractérisée en ce que
les cames (23, 23b) présentent une forme de base ovale et les bras antagonistes des crampons (17, 18, 36, 37) sont équipés de plusieurs encoches de profondeurs différentes (24, 25, 26, 43, 44) qui servent à recevoir les cames (23, 23b).

10. Roue convoyeuse en étoile selon la revendication 9,
caractérisée en ce que
les encoches (24, 25, 26) se trouvent serrées les unes à côté des autres et présentent des zones intermédiaires arrondies.

11. Roue convoyeuse en étoile selon la revendication 8,
caractérisée en ce que
chaque came (23a) présente deux zones en forme de spirale du même type, décalées de 180 degrés.

12. Roue convoyeuse en étoile selon la revendication 8 à 11,
caractérisée en ce que
chaque came (23, 23a, 23b, 23c) est reliée de façon solidaire en rotation avec au moins un levier de commande (28, 28a, 29) qui coopère avec les butées fixes (30, 31).

13. Roue convoyeuse en étoile selon la revendication 12,
caractérisée en ce qu'
on peut fixer une butée réglable (30) à plusieurs distances différentes de l'axe de rotation de la roue convoyeuse en étoile, d'une manière telle que l'on puisse faire tourner les cames (23, 23a, 23b, 23c) lors du passage de la butée (30) d'un angle de pivotement différent et/ou dans un sens de rotation différent, une position de fermeture étant associée à chaque angle de pivotement ou à chaque sens de rotation.

14. Roue convoyeuse en étoile selon l'une des revendications 8 à 13,
caractérisée en ce que
les différentes positions de fermeture et la position d'ouverture d'une came (23, 23a) sont comprises à l'intérieur d'un angle de pivotement de 90 degrés.

15. Roue convoyeuse en étoile selon l'une des revendications 1 à 14,
caractérisée en ce que
deux crampons (36, 37) qui forment une pince de préhension sont accouplés l'un à l'autre de façon solidaire en rotation par une transmission (38) et en fait avec un sens de rotation différent.

16. Roue convoyeuse en étoile selon la revendication 15,
caractérisée en ce que
la transmission (38) est formée par une denture.

17. Roue convoyeuse en étoile selon la revendication 15,
caractérisée en ce que
la transmission (38) présente un axe (39) qui vient en prise de façon lâche dans des rainures (40), constituées sur les deux crampons (36, 37).

18. Roue convoyeuse en étoile selon l'une des revendications 15 à 17,
caractérisée en ce que
le corps extensible (23b, 23c) vient en prise dans les positions de fermeture respectivement seulement sur l'un des deux crampons (36, 37) qui constituent une pince de préhension.

19. Roue convoyeuse en étoile selon l'une des revendications 15 à 18,
caractérisée en ce que
• la came (23b) présente seulement une zone de pression (45), disposée de façon excentrée par rapport à son axe de rotation,
• les bras antagonistes des deux crampons correspondants (36, 37) sont pourvus de crans formés différemment (43, 44) et
• la came (23b) peut être inversée entre les deux crampons (36, 37).

20. Roue convoyeuse en étoile selon l'une des revendications 1 à 18,
caractérisée en ce que
la came (23c) présente plusieurs zones de pression (47, 48), disposées à des distances différentes de son axe de rotation, zones de pression (47, 48) qui viennent au choix en prise sur le bras antagoniste du même crampon (36).

21. Roue convoyeuse en étoile selon l'une des revendications 1 à 20,
caractérisée en ce que
les différentes positions de fermeture des corps extensibles (23, 23a, 23b, 23c) peuvent être prises au choix par le système de commande (32).
